# EUROPEAN PATENT APPLICATION

(11) **EP 1 347 189 A2**
(43) Date of publication of application: **24.09.2003**
(21) Application number: 03445036.1
(22) Date of filing: 18.03.2003
(51) Int. Cl.: F16C 35/063, F16C 35/067, F16C 35/073, F16C 35/077

(54) **Bearing seat with axial grooves and ridges**

(30) Priority: 20.03.2002 SE 0200884
(71) Applicant: Aktiebolaget SKF, S-415 50 Göteborg (SE)
(72) Inventor: Lindén, Hans, 442 94 Ytterby (SE); Östling, Folke, 412 67 Göteborg (SE)
(74) Representative: Westman, Per Börje Ingemar

(57) **Abstract**

The invention refers to an improved bearing seat provided in or on a cylindrical surface of a component to which the bearing shall be mounted, whereby the component (13; 18) in which the bearing seat (12; 17) is provided, at least in the surface region is softer than the rings of the bearing (5) to be interconnected to the component via the seat, and that either one of seat (12; 17) and bearing ring in their surfaces facing each other has a number of irregularities (16;19), arranged under a mutual axial mounting motion between the seat and the bearing ring to cause a deformation to the softer surface region, thereby forming a mutual grip between the seat and the bearing ring.

## Description

The present invention refers to an improved bearing seat provided in or on a cylindrical surface of a component to which the bearing shall be mounted.

Bearings are commonly used in combination with different types of bearing housings, or other components wherein the bearing is mounted in or on a seat in the housing or component, in such a manner that it shall be retained in the mounted position without being able to rotate in relation to the seat. It is often also desired that the bearing ring or rings shall not be axially movable in or on the seat unless subjected to intentional dismounting measures. Different types of attachment means have earlier been used for effecting such retainment of the bearing, such as tapering adapter sleeves and the like, which however mean increased number of components in the bearing assembly and therefore increased costs, and it also has been used interference fits, whereby is required close manufacturing tolerances and especial mounting and dismounting appliances and/or tools. Such accurate machining of the components require an increased manufacturing cost and the need of mounting and dismounting appliances and tools will also increase the handling work and thereby also the costs.

The purpose of the present invention is to provide an improved bearing seat, by which the bearing can be mounted in the seat in a simple and efficient manner, without the need for close manufacturing tolerances and without aid of additional appliances, and this has been achieved in that the component in or on which the bearing seat is provided, at least in the surface region is softer than the bearing ring to be interconnected to the component via the seat, and that either one of seat and bearing ring in their surfaces facing each other has a number of irregularities arranged under a mutual axial mounting motion between the seat and the bearing ring to cause a deformation to the softer surface region, thereby forming a mutual grip between the seat and the bearing ring.

Hereinafter the invention will be further described with reference to a number of embodiments schematically shown in the accompanying drawings.

Fig. 1 shows schematically a side view of a bearing to be mounted in a split component forming two cooperating bearing seat portions in accordance with the invention.
Fig. 2 shows schematically an embodiment of the invention, wherein is shown an upper half of a bearing fitted to a shaft and mounted in a simple housing in accordance with the invention.
Fig. 3 is a schematic end view cross-section of a one-piece cylindrical bearing housing and a bearing (shown as a circular member) positioned herein in accordance with the invention.
Figs. 4 and 5 represent schematic views of different surface textures of at least one of the cooperating surfaces of the bearing and component to which the bearing shall be interconnected, and
Fig. 6 finally shows in an exploded perspective view a bearing and an inner and an outer component to which the bearing shall be mounted in accordance with the invention.

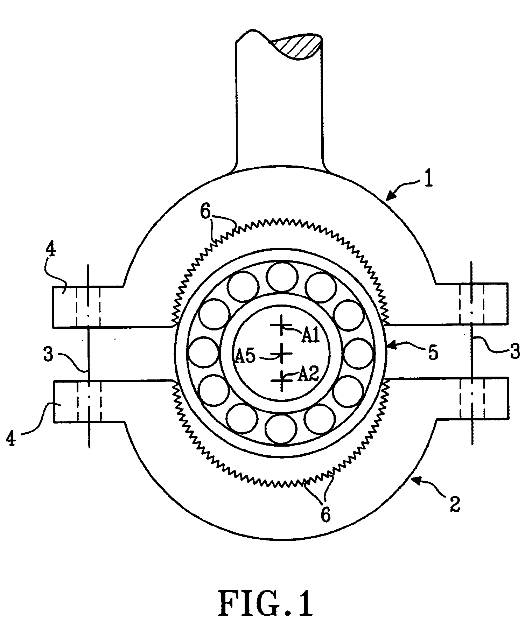

Fig. 1 shows schematically a side view of a bearing housing comprising an upper and a lower, substantially semi-spherical bearing housing half 1, 2, which are intended to be interconnected by means of bolts 3 or the like, arranged to pass through bores in lugs 4 projecting radially outwards from the open edges of the semi-spherical bearing housing halves 1, 2. The split bearing housing is enclosing a bearing 5, shown as a ball bearing, but which can be any type of standard rolling or sliding bearing. At least the internal surfaces of the housing halves 1, 2 facing the bearing 5, are produced to have a lower hardness than the bearing, and they are also shaped with surface irregularities 6, preferably in form of grooves and ridges or serrations, extending substantially in the axial direction of the bearing 5. The housing halves 1, 2 are preferably made as sintered press bodies of metal powder, but they might also be manufactured as bodies of cast material, e.g. from aluminium or other alloys or materials being softer than the material of the bearing ring.

In Fig. 1 the two bearing housing halves 1, 2 are shown with a certain mutual distance in order better to illustrate the relation between the components. When the bolt joints 3 or the like are tightened, thus that the gap between the lugs 4 of the housing halves 1 and 2 is eliminated, and the lugs 4 are in close contact with each other, the irregularities 6 or ridges have been brought in close contact with the harder material of the outer race ring of the bearing 5, whereby the irregularities have been deformed thus that the softer material will embrace the bearing and keep it in mounted position, thereby preventing it from making rotational movements in the bearing housing as well as axial motions in the housing, until a displacement force required for further deforming the softer material intentionally has been applied to the bearing for allowing it to be dismounted.

Fig. 1 also shows that the axes A1, A2, A5 of the different components 1, 2, 5 might be offset from each other, whereby the deformation of the softer material will compensate for such initial misalignments to a certain degree. This also means that the requirements for manufacturing tolerances can be kept at a comparatively low level, when it comes to the manufacture of the bearing housing halves, and it also implies that it even is possible to use bearings, which due to certain outer ring defects otherwise would have been rejected, as some of those defects can be compensated by the deformation of the softer material during the mounting operation. Thus it is possible, not only to achieve a less expensive and yet reliable mounting, but it is also possible to use components having less accurate tolerances, which also contributes to a lower cost.

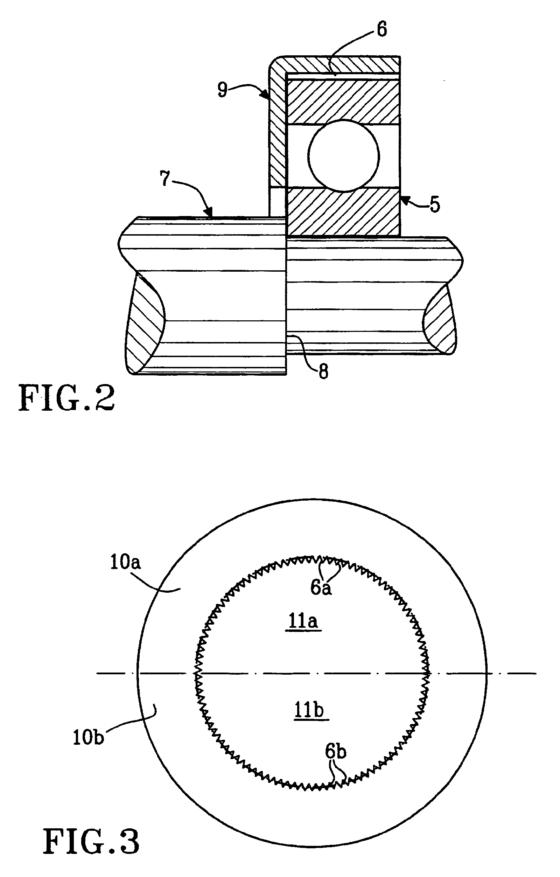

In Fig. 2 is shown in a side view a portion of a shaft 7 and in cross-section one half of a ball bearing 5 mounted with its inner ring on the shaft 7, against a shoulder 8 and having a simple, cup-shaped housing 9 (only half portion shown) in which the outer ring of the bearing 5 is mounted. Also in this embodiment the seat in the housing 9 is of a softer material than the bearing 5 itself, and the outer envelope surface of the outer ring of the bearing has preferably a number of surface irregularities 6 extending substantially in the axial direction, although it is also possible that the surface irregularities extend at an angle to the axial direction, and the irregularities might even be provided in the inner envelope surface of the housing itself.

As the housing 9 in this case is shaped as a one-piece cup, it can not be interconnected with the bearing in the same manner as in the embodiment according to Fig. 1, where the two halves of the two-piece housing are mounted around the bearing by being tightened against each other in radial direction, thereby causing a deformation of the softer material, required for creating a firm grip between the bearing and the seat. Therefore in the embodiment shown in Fig. 2, the bearing 5 has to be pushed axially into the housing (or vice versa), whereby the surface irregularities 6 cause a deformation of the softer material, either the irregularities are provided in the surface of the housing or in the bearing. Even in this case the bearing will be securely arrested against rotating in the seat of the housing 9, although the grip preventing against axial displacement in the housing is somewhat less effective as compared to the embodiment according to Fig. 1, where the material deforming force is applied radially.

Fig. 3 shows in a schematic end view an external, one-piece housing, which is shown in two different embodiments 10a, above the horizontal and 10b below, and which differ slightly. A bearing 11a, 11b (for the sake of simplicity here shown only as a circular surface) is inserted in the housing 10a, 10b. In the upper embodiment, the outer envelope surface of the outer ring of the bearing 11a is provided with a plurality of substantially axially extending surface irregularities 6a in form of grooves and ridges, serrations, splines or the like, which, when the bearing 11a is pushed axially into the housing 10a, will cut grooves in the softer material of the inner envelope surface, thereby causing a deformation of this material, which will create a grip between the bearing and the housing, primarily preventing rotation of the bearing in the seat in the housing 10a.

In the lower half of Fig. 3 is shown how the seat in the bearing housing 10b is provided with inwardly projecting irregularities 6b, extending primarily in axial direction and thereby being subjected to an axial force when the bearing 11b with its harder outer ring, is pushed into the seat in the housing 10b. This axial force will cause the softer material in the inner envelope surface of the bearing housing 10b to be deformed when the bearing is pushed in, thereby creating a grip, retaining the bearing in the mounted position in the seat until a bigger axial force is applied for continuing the deformation of the material in the softer surface portion, thereby releasing the grip.

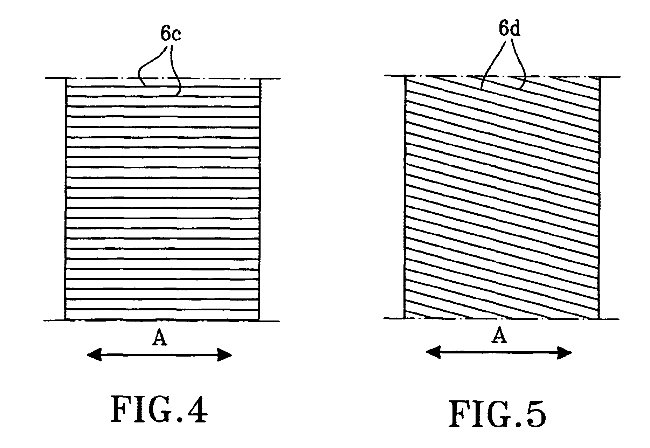

Fig. 4 shows in a planar view an example of the shape of the surface irregularities 6c in the inner or outer envelope surface of the seat in the housing or the bearing ring, and in this embodiment the surface is covered with a large number of serrations or splines extending truly axially along the surface (axial direction marked A).

Fig. 5 shows in a view similar to Fig. 4 another example of the shape if the surface irregularities 6d, which here are shown to extend slightly inclined to the axial direction (A) of the envelope surface.

It is of course also possible to let the surface irregularities extend at other angles than that shown in Fig. 5, although a bigger angle in relation to the axial direction will require a bigger pushing-in force. However, it is also possible to let the angle between grove, serration or the like and the axial direction vary, thus that a helical extension is obtained, whereby the bearing can be "screwed" into the seat in the bearing housing at mounting.

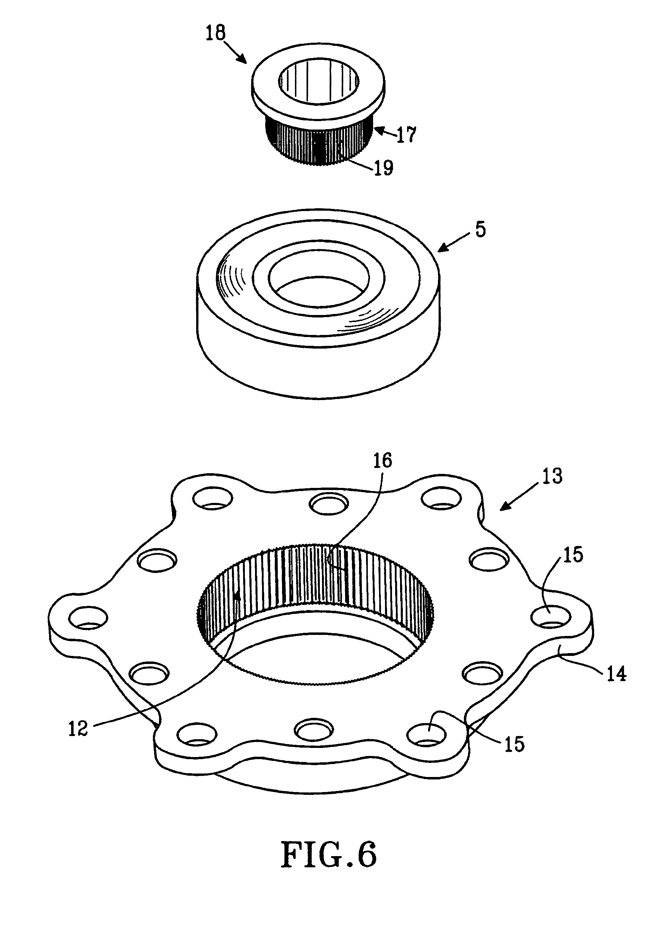

Fig. 6 shows finally in an exploded perspective view a sealed bearing 5 intended for mounting with its outer ring in a seat 12 in the inner envelope surface of an external bearing housing 13, which, in the embodiment shown, is designed with external flanges 14 with attachment holes 15 for attachment of the housing to a machine part or an implement of any appropriate type. The seat 12 is equipped with axially extending surface irregularities 16 or serrations, which act as the surface irregularities 6 mentioned and described in connection to the earlier described embodiments of the invention. The housing 13 has a rather complex shape, but it can preferably be manufactured as a component in the form of a sintered powder pressed body, whereby the component can be obtained with a minimum of machining. The material in the bearing housing 13 is softer than that of the bearing rings themselves, and when pushed in axially, the bearing 5 therefore will cause deformation to the surface irregularities 16 in the seat 12, thereby arresting the bearing in the bearing housing 13, particularly against rotation in the seat. In this particular embodiment it is further shown, how a seat 17 can be provided for the bearing 5 at the outer envelope surface of a sleeve 18, which can be used as a shaft journal or a connection to another part of a non-rotating of rotating machine member.

The sleeve 18 is preferably - but not necessarily - made from a sintered press body, and has a lower hardness than the bearing rings. The seat 17 on the outer envelope surface of the sleeve 18 is provided with axially extending surface irregularities 19, which due to the lower hardness of the sleeve will be deformed when pushed into the bearing 5, thus generating a firm grip between bearing and sleeve, which however can be released by additional forces acting in the opposite direction and causing a further deformation of the softer material.

The invention is not limited to the embodiments illustrated and described, but modifications and variants are possible within the scope of the accompanying drawings. Thus it is possible to use seats provided in components, which are not sintered press bodies, but which can be made from cast aluminium or the like, and it is also possible to use housing components made from other materials softer than the material in the bearing rings. As illustrated in the embodiment according to Fig. 6, the same mounting can be used both regarding the inner and the outer ring, and in spite of the fact that the different embodiments have shown either mountings with the deformable surface irregularities either on the outer or on the outer and the inner bearing envelope surface, it is evident that the same type of mounting can be used also for the inner bearing ring only.

## Claims

1. An improved bearing seat provided in or on a cylindrical surface of a component to which the bearing shall be mounted,
characterized therein,
that the component (1 ,2 ; 9; 10a, 10b;13; 18) in which the bearing seat (12; 17) is provided, at least in the surface region is softer than the rings of the bearing (5) to be interconnected to the component via the seat, and that either one of seat (12; 17) and bearing ring in their surfaces facing each other has a number of irregularities (6; 6a, 6b, 6c, 6d; 16;19), arranged under a mutual axial mounting motion between the seat and the bearing ring to cause a deformation to the softer surface region, thereby forming a mutual grip between the seat and the bearing ring.

2. A bearing seat as claimed in claim 1,
characterized therein,
that the component (1, 2 ; 9; 10a, 10b;13; 18) in or on which the seat (12; 17) is provided has at least a surface region made from a sintered material.

3. A bearing seat as claimed in claim 1,
characterized therein,
that the component (1, 2; 9; 10a, 10b;13; 18) in or on which the seat is provided is made from sintered material.

4. A bearing seat as claimed in anyone of the preceding claims,
characterized therein,
that the component is a bearing housing (1,2;9; 10a, 10b; 13) provided with an internal, substantially cylindrical seat (12) in which the outer race ring of the bearing (5) is insertable.

5. A bearing seat as claimed in anyone of claims 1-3,
characterized therein,
that the component is a sleeve (18) provided with an external, substantially cylindrical seat (19), on which the inner race ring of the bearing can be pushed up.

6. A bearing seat as claimed in anyone of the preceding claims,
characterized therein,
that the irregularities are grooves and ridges (6; 6a, 6b, 6c; 16; 19) extending substantially in the axial direction (A) of the seat/the bearing ring.

7. A bearing seat as claimed in anyone of claims 1-5,
characterized therein,
that the irregularities are grooves and ridges (6d) extending angularly to the axial direction (A) of the seat/the bearing ring.

8. A bearing seat as claimed in claim 7,
characterized therein,
that the grooves and ridges extend helically along the seat/bearing ring.
